# EUROPÄISCHE PATENTSCHRIFT

(11) **EP 3 772 281 B1**
(45) Veröffentlichungstag und Bekanntmachung des Hinweises auf die Patenterteilung: **06.04.2022**
(21) Anmeldenummer: 19190420.0
(22) Anmeldetag: 07.08.2019
(51) Int. Cl.: A21C 1/02, A21C 1/14, B01F 7/16, B01F 13/04, F16P 3/12

(54) **KNETMASCHINE FÜR TEIGE MIT EINKLEMMSCHUTZ UND VERFAHREN ZUM EINSCHWENKEN EINES KNETWERKZEUGS**
DOUGH KNEADING MACHINE WITH PINCH PROTECTION AND METHOD FOR PIVOTING A KNEADING TOOL
MACHINE À PÉTRIR POUR PÂTES À PROTECTION CONTRE LES COINCEMENTS ET PROCÉDÉ POUR PIVOTER UN OUTIL À PÉTRIR

(43) Veröffentlichungstag der Anmeldung: 10.02.2021
(73) Patentinhaber: DIOSNA Dierks & Söhne GmbH, 49086 Osnabrück (DE)
(72) Erfinder: BENSMANN, Stefan, 49078 Osnabrück (DE); GHANI, Hashem, 49086 Osnabrück (DE)
(74) Vertreter: Lenzing Gerber Stute

(56) Entgegenhaltungen:
- CN-U- 208 764 651
- IT-A1- VI20 060 294
- - -: "Brochure Spiral MD-W line", , 31. Dezember 2018 (2018-12-31), XP055645491, Gefunden im Internet: URL:https://www.eschermixers.com/images/Es cherMixers_MD-MDW-line.pdf [gefunden am 2019-11-22]

## Beschreibung

Die vorliegende Erfindung betrifft eine Knetmaschine für Teige mit den Merkmalen des Oberbegriffs des Anspruchs 1, sowie ein Verfahren zum Einschwenken eines Knetwerkzeugs in einen Knetbottich mit den Merkmalen des Oberbegriffs des Anspruchs 12.

Knetmaschinen für Teige, insbesondere Backteige, weisen einen Knetbottich unterschiedlicher Größe für Teigmassen von 100 bis 1000 Kg auf, in den jeweils ein motorisch antreibbares Knetwerkzeug zur Durchführung des Knetvorganges einbringbar ist. Im Betrieb ist der Knetbottich von einem Deckel verschlossen. Nach Beendigung des Knetvorganges wird das Werkzeug herausgefahren. Es sind Knetmaschinen mit Mittenentleerungsvorrichtungen im Boden bekannt. Ist der Knetvorgang abgeschlossen, wird der Teig durch diese Mittenentleerungsvorrichtungen nach unten ausgegeben und kann mithilfe eines Transportsystems an beispielsweise einen Linienportionierer weitergegeben werden.

Das Ein- und Ausfahren des Knetwerkzeugs in den Knetbottich birgt die Gefahr, dass Gliedmaßen einer Person in den vorhandenen Spalt zwischen Knetbottich und Deckel geraten und die ausgeübten Schließkräfte Verletzungen hervorrufen. Um die Verletzungsgefahr zu verringern bzw. auszuschließen ist ein Sicherheitsring vorgesehen, der den Deckel umfangseitig umgibt und den Deckel in Richtung des Knetbottichs, an der Unterseite überragt. Der Sicherheitsring ist relativ zu dem Deckel beweglich an diesem befestigt. Im Einklemmfall stößt als erstes der Sicherheitsring auf ein zwischen Deckel und Knetbottich platziertes Objekt oder eine Gliedmaße. Der Sicherheitsring bewegt sich dadurch relativ zu dem Deckel, der noch weiter verfährt. Diese Relativbewegung wird zum Betätigen eines Schalters genutzt, wodurch die Drehrichtung des zum Einbringen des Knetwerkzeugs in den Bottich vorgesehenen Elektromotors umgekehrt wird.

Bei einer Knetmaschine mit offenem Konzept gibt es noch andere Quetschstellen, die beim Einschwenken des Knetwerkzeugs in den Bottich für Gefahrpotential sorgen.

Eine Knetmaschine gemäß dem Oberbegriff des Anspruchs 1 ist in "Brochure Spiral MD-W line" [online], 31. Dezember 2018 (2018-12-31), [gefunden am 2019-11-22], gefunden im <https:// www.eschermixers.com/images/EscherMixers_MD-MDW-line.pdf> offenbart.

Es ist daher Aufgabe der vorliegenden Erfindung ein gefahrloses Verschwenken des Knetwerkzeugs einer Knetmaschine mit offenem Konzept kostengünstig und einfach sicherzustellen.

Diese Aufgabe wird von einer Knetmaschine für Teige mit den Merkmalen des Anspruchs 1 und einem Verfahren zum Einschwenken eines Knetwerkzeugs in einen Knetbottich mit den Merkmalen des Anspruchs 12 gelöst.

Demnach ist eine Knetmaschine für Nahrungsmittelteige aufweisend ein Knetmaschinengestell mit einem Unterteil und einem gegenüber dem Unterteil zwischen einer unteren Betriebsstellung und einer oberen Reinigungsstellung verfahrbaren Kopfteil vorgesehen, wobei an dem Unterteil ein Knetbottich anordbar ist und an dem Kopfteil ein antreibbares Knetwerkzeug und ein eine Öffnung des Knetbottichs in der Betriebsstellung verschließender Deckel angeordnet sind. Der Deckel ist umfangsseitig von einem ersten Sicherheitsring einer Sicherheitsvorrichtung umgeben, der an der Unterseite des Deckels über diesen übersteht und der an diesem beweglich befestigt ist, wobei die Sicherheitsvorrichtung eine Detektionseinrichtung aufweist, die eine Relativbewegung zwischen Deckel und erstem Sicherheitsring detektiert. Das Knetmaschinengestell weist wenigstens zwei Zapfenlager auf, die jeweils aus einem Zapfen und einer passenden Aufnahme gebildet sind, wobei eines der Lagerelemente (Zapfen, Aufnahme) an dem Unterteil und das andere Lagerelement (Aufnahme, Zapfen) an dem Kopfteil ausgebildet sind, derart, dass sie in der unteren Betriebsstellung ineinandergreifen und die Lage des Kopfteils gegenüber dem Unterteil sichern. Der erste Sicherheitsring ist einteilig mit einem Einklemmschutz für die wenigstens zwei Zapfenlager ausgebildet. Der Einklemmschutz für die Zapfenlager ist dadurch besonders kostengünstig und erweitert den bereits bestehenden Sicherheitsring.

Bevorzugt ist die Knetmaschine zur Aufnahme von Teigmassen in einem Bereich von 100 bis 1000 Kg ausgelegt.

Der Kopf der Knetmaschine kann verschwenkbar gegenüber dem Unterteil sein oder senkrecht zu diesem verfahren werden.

Der Knetbottich kann einen verschließbarem Bodenauslauf aufweisen oder zum Austrag der Teigmasse verschwenkt oder aus der Knetmaschine entnommen werden.

Vorzugsweise weist der Einklemmschutz für jedes Zapfenlager einen weiteren Sicherheitsring auf, der das am Kopfteil befestigte Lagerelement umfangseitig umgibt und nach unten hin überragt, so dass ein Überstand ausgebildet ist. Diese Ausgestaltung stellt einen einfachen aber sicheren Einklemmschutz dar, denn die Sicherheitsringe sind einteilig mit dem ersten Sicherheitsring ausgebildet, wodurch eine Relativbewegung zwischen Lagerelement und Sicherheitsring in der Detektionseinrichtung detektiert werden kann.

Es ist vorteilhaft, wenn der Überstand des Einklemmschutzes für die wenigstens zwei Zapfenlager größer als die Zapfenhöhe bzw. die Eindringtiefe des Zapfens in die Aufnahme ist, damit sichergestellt werden kann, dass ein Hindernis nicht eingeklemmt werden kann.

Vorzugsweise sind die Zapfen kegelförmig und in Richtung der Aufnahme zulaufend ausgebildet. Sie dienen der Zentrierung des Kopfteils auf dem Unterteil.

In einer vorteilhaften Ausführungsform weist die Knetmaschine zwei Zapfenlager auf, die jeweils auf einer Seite des Knetbottichs angeordnet sind.

Es ist vorteilhaft, wenn an dem Unterteil die Zapfen angebracht sind und das Kopfteil die entsprechenden Aufnahmen aufweist.

Vorzugsweise ist die Detektionseinrichtung derart ausgestaltet, auch eine Relativbewegung zwischen Kopfteil und Sicherheitsring der Zapfenlager detektiert werden kann.

Es kann zusätzlich vorgesehen sein, dass die Sicherheitsvorrichtung eine zweite Detektionseinrichtung umfasst, die dazu eingerichtet ist eine Relativbewegung zwischen Kopfteil und Sicherheitsring der Zapfenlager zu detektieren.

Ein Sicherheitsring ist bevorzugt im Wesentlichen zylindrisch ausgebildet und weist einen umlaufenden Mantel mit zwei Randbereichen auf, wobei die beiden Randbereiche zur Versteifung des Sicherheitsrings umgebogen sind.

Der Sicherheitsring ist bevorzugt aus Edelstahlblech gebildet, das eine Stärke zwischen 1mm und 3mm hat. Dabei ist es vorteilhaft, wenn der untere, deckelferne umgebogene Randbereich bevorzugt eine Breite zwischen 5 und 15 mm, insbesondere zwischen 5 mm und 10 mm, aufweist.

Weiterhin ist ein Verfahren zum Einschwenken eines Knetwerkzeugs in einen Knetbottich einer zuvor beschriebenen Knetmaschine für Nahrungsmittelteige mit folgenden Schritten vorgesehen:
a ) Verfahren des Kopfteils gegenüber dem Unterteil von der oberen Reinigungsstellung in die untere Betriebsstellung,
b ) Einbringen eines Hindernisses in ein noch geöffnete Zapfenlager,
c ) Detektion einer Relativbewegung zwischen dem Einklemmschutz und dem Kopfteil,
d ) Verfahren des Kopfteils in Richtung der oberen Reinigungsstellung.

Das Verfahren des Kopfteils kann sowohl hydraulisch als auch mittels Elektromotor erfolgen. Vorzugsweise wird im Verfahrensschritt d) das Kopfteil in die obere Reinigungsstellung komplett zurück gefahren, insbesondere geschwenkt.

Die Detektion in Verfahrensschritt c) kann mittels der Detektionseinrichtung oder einer zweiten, zusätzlich zur Detektionseinrichtung an den Sicherheitsringen der Zapfenlager angebrachten Detektionseinrichtung erfolgen.

Das Verfahren umfasst weiterhin bevorzugt folgende Verfahrensschritte folgend auf Verfahrensschritt a):
e ) Einbringen eines Hindernisses zwischen Knetbottich und Deckel,
f ) Detektion einer Relativbewegung zwischen dem ersten Sicherheitsring und dem Deckel,
g ) Ansteuern des Elektromotors des Schwenkantriebs, so dass das Kopfteil in Richtung der oberen Reinigungsstellung verfahren wird.

Die Sicherheitseinrichtung kann somit alle Quetschstellen, die beim Einschwenken des Knetwerkzeugs in den Bottich für Gefahrpotential sorgen, überwachen und eine Reaktion zum Zurückschwenken des Knetwerkzeuges auslösen.

Eine bevorzugte Ausführungsform der Erfindung wird nachfolgend anhand der Zeichnungen näher erläutert. Gleichartige oder gleichwirkende Bauteile werden in den Figuren mit denselben Bezugszeichen bezeichnet. Es zeigen:
- Figur 1:: eine räumliche Darstellung einer Knetmaschine mit Knetbottich in einer oberen Reinigungsstellung,
- Figur 2:: eine räumliche Darstellung einer Knetmaschine mit Knetbottich in einer unteren Betriebsstellung,
- Figur 3:: eine räumliche Ansicht eines Deckels eines Knetbottichs mit Sicherheitsvorrichtung, sowie
- Figur 4:: eine Detailansicht eines Sicherheitsrings der Sicherheitsvorrichtung mit Längsschnitt.

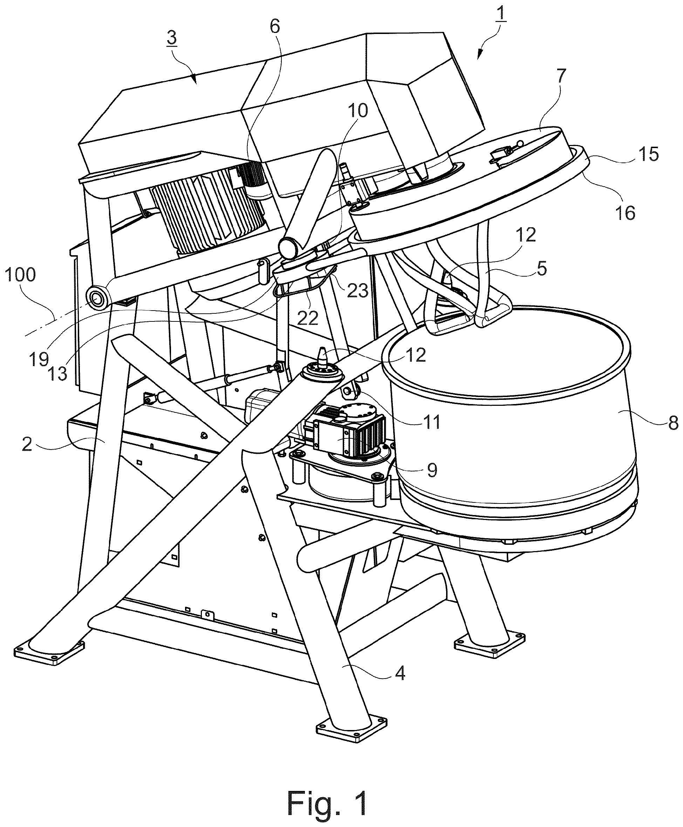

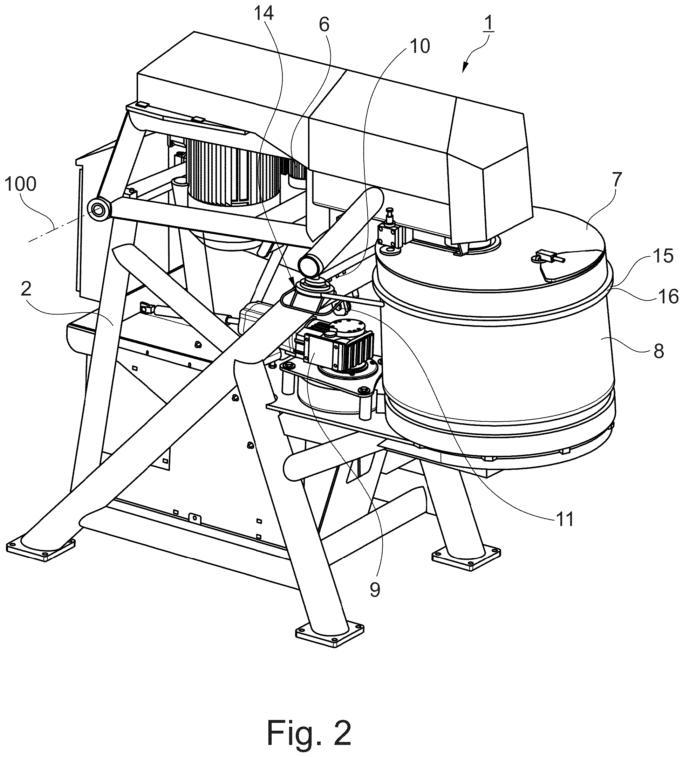

Die Figuren 1 und 2 zeigen eine Knetmaschine 1 zur Verarbeitung eines Nahrungsmittelteigs, insbesondere eines Backteigs. Die Knetmaschine 1 weist ein Knetmaschinengestell 2 auf, dessen Kopfteil 3 um eine Schwenkachse 100 zwischen einer unteren Betriebsstellung und einer oberen Reinigungsstellung gegenüber einem Unterteil 4 verschwenkbar ist. Das Kopfteil 3 trägt das Knetwerkzeug 5, hier dargestellt sind zwei entgegengesetzt drehende Wendelkneter, und den für eine Rotation des Knetwerkzeugs 5 benötigten Antrieb 6, sowie einen Deckel 7, der zum Abdecken des nach oben hin offenen Knetbottichs 8 vorgesehen ist. Im Unterteil 4 der Knetmaschine 1 sind der Knetbottich 8 und ein Elektromotor 9 angeordnet. Der Elektromotor 9 dreht den Knetbottich 8 um eine nicht dargestellte Rotationsachse gegenüber dem Knetmaschinengestell 2. Im Boden des Knetbottichs 8 ist eine nicht dargestellte Öffnung vorgesehen, die durch einen Verschlussmechanismus verschließbar ist. Nach dem Knetvorgang wird zum Austragen des Teigs aus dem Knetbottich 8 der Verschlussmechanismus betätigt, so dass die Öffnung freigegeben wird und der Teig nach unten aus dem Knetbottich 8 ausgegeben werden kann. Im Kopfteil 3 ist weiterhin ein Schwenkantrieb 10 platziert, der als Linearantrieb ausgebildet ist und einen Elektromotor aufweist. Der Schwenkantrieb 10 stützt sich an dem Unterteil 4 in einem Drehgelenk 11 ab. Durch Verfahren des Linearantriebs wird der Abstand vom Kopfteil 3 zu dem Unterteil 4 vergrößert bzw. verkleinert, das in ein Verschwenken des Kopfteils 3 gegenüber dem raumfesten Unterteil 4 um die Schwenkachse 100 resultiert.

Am Unterteil 4 des Knetmaschinengestells 2 sind zwei Zapfen 12 vorgesehen, die sich parallel zur Rotationsachse des Knetbottichs 8 und somit orthogonal zum Boden, auf dem die Knetmaschine 1 steht, erstrecken. Die Zapfen 12 sind jeweils auf einer Seite des Knetbottichs 8 angeordnet. Sie sind kegelförmig und in Richtung des Deckels 7 zulaufend ausgebildet. Sie werden beim Schwenkvorgang, zum Ende der Bewegung in die Betriebsstellung hin, in korrespondierende und passende Aufnahmen 13 in dem Kopfteil 3 aufgenommen. Die Zapfen 12 dienen als Anschlag der Schwenkbewegung und als Positionierungshilfe des Kopfteils 3 auf dem Unterteil 4 des Gestells 2. Zudem werden die bei einem Knetvorgang auf das Knetmaschinengestell 2 wirkenden Kräfte in dem aus dem Zapfen und der Aufnahme gebildeten Zapfenlager 14 aufgenommen, so dass die Position des Kopfteils 3 auf dem Unterteil 4 gesichert ist. In dem Bereich um den Zapfen 12 herum, liegt das Kopfteil 3 in der Betriebsstellung in Anlage mit dem Unterteil 4 und das Unterteil 4 bildet eine Auflagefläche für das Kopfteil 3 aus.

In der Figur 1 ist die Reinigungsstellung dargestellt in der das Knetwerkzeug 5 und das Innere des Knetbottichs 8 frei für Reinigungs- und Service-Arbeiten zugänglich sind.

Figur 2 zeigt den Betriebszustand. Die Öffnung des Knetbottichs 8 ist vollständig von dem Deckel 7 abgedeckt und die beiden Zapfen 12 des Unterteils 4 greifen in die jeweilige Aufnahme 13 des Kopfteils 3 der Knetmaschine 1 ein.

Bei dem Schwenkvorgang besteht Quetschgefahr sowohl zwischen Knetbottich 8 und Deckel 7 als auch zwischen Kopfteil 3 und Unterteil 4 im Bereich der Zapfenlager 14.

Um eine Verletzungsgefahr in diesen beiden Bereich zu verringern bzw. auszuschließen ist eine Sicherheitsvorrichtung 15 aufweisend einen ersten Sicherheitsring 18 vorgesehen, der den Deckel 7 umfangseitig umgibt und in Richtung Knetbottich 8, den Deckel 7 an der Unterseite überragt. Der erste Sicherheitsring 18 ist relativ zu dem Deckel 7 beweglich an diesem befestigt. Durch den Überstand 16 wird sichergestellt, dass im Einklemmfall als erstes der erste Sicherheitsring 18 auf ein zwischen Deckel und Knetbottich liegendes Hindernis, wie beispielsweise ein Finger oder eine Hand, stößt. In diesem Fall verschiebt sich der erste Sicherheitsring 18 relativ zu dem Deckel 7, der noch weiter in Richtung Betriebsstellung verfährt. Diese Relativbewegung wird zum Betätigen eines Schalters genutzt, wodurch die Drehrichtung des Elektromotors des Schwenkantriebs 10 umgekehrt wird und somit ein Quetschen des Hindernisses verhindert werden kann.

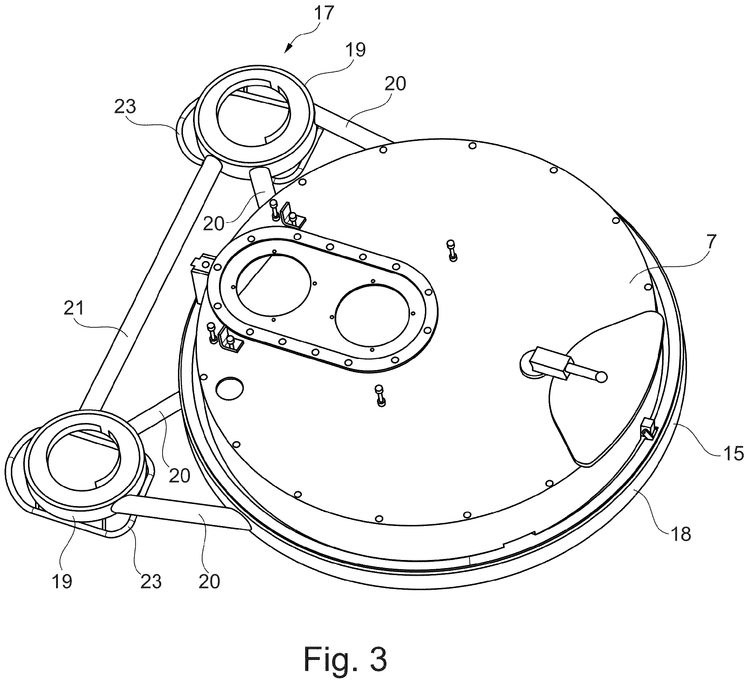

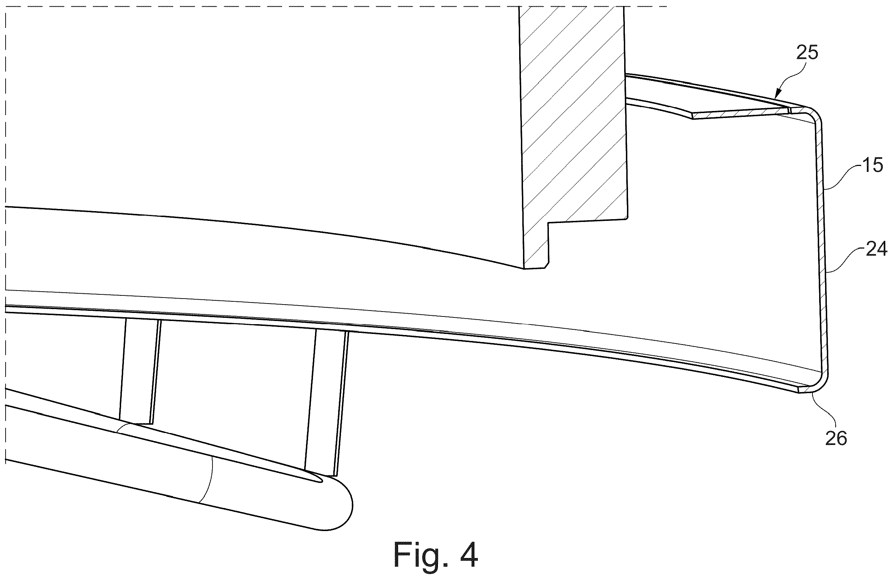

Die Figuren 3 und 4 zeigen den als Einklemmschutz fungierende Sicherheitsvorrichtung 15 im Detail. Der erste Sicherheitsring 18 ist einteilig mit einem Einklemmschutz 17 für die beiden Zapfenlager ausgebildet. Der Einklemmschutz 17 weist zwei weitere Sicherheitsringe 19 auf, die beabstandet zu einander angeordnet sind und mittels Streben 20 an dem ersten Sicherheitsring 18 der Sicherheitsvorrichtung 15 befestigt sind. Um die Stabilität der Sicherheitsvorrichtung 15 zu erhöhen sind die beiden weiteren kleinen Sicherheitsringe 19 untereinander ebenfalls mit einer Strebe 21 verbunden. Wie in Figur 1 zusehen ist, sind die beiden weiteren kleinen Sicherheitsringe 19 derart ausgebildet, dass sie die Aufnahmen 13 des Zapfenlagers im Kopfteil 3 des Knetmaschinengestells 2 umfangseitig umgeben und nach unten hin überragen, so dass ein Überstand 22 ausgebildet ist. Der Überstand 22 ist dabei größer als die Zapfenhöhe bzw. die Eindringtiefe des Zapfens 12 in die Aufnahme 13. Die Sicherheitsvorrichtung 15 kann im Bereich des Einklemmschutzes 17 für die Zapfenlager an ihrem unterteilnahen Ende einen Aufsatz 23 in Form einer umlaufenden Reling aufweisen. Der Aufsatz 23 bildet den benötigten Überstand 22 aus. Da der Aufsatz 23 nicht vollflächig ist, kann Gewicht eingespart werden. Der Aufsatz 23 ist bevorzugt einteilig mit de jeweiligen Sicherheitsring ausgebildet.

Durch den Überstand 22 wird sichergestellt, dass im Einklemmfall als erstes eines der Sicherheitsringe 15 auf ein zwischen Kopfteil 3 und Zapfen 12 liegendes Hindernis stößt. Auch in diesem Fall verschiebt sich der erste Sicherheitsring 18 relativ zu dem Deckel 7, was zum Betätigen des Schalters genutzt wird, um ein Quetschen des Hindernisses zu verhindern. Es kann aber auch vorgesehen sein, dass die beiden kleineren Sicherheitsringe 19 einen oder jeweils einen zusätzlichen Schalter aufweisen, der eine Relativbewegung der kleinen Sicherheitsringe 19 zu dem Kopfteil 3 detektieren und eine Änderung der Drehbewegung des Elektromotors unabhängig von dem Schalter des ersten Sicherheitsringes 18 auslösen kann.

Figur 4 zeigt im Detail den ersten Sicherheitsring 18 der Sicherheitsvorrichtung 15. Er ist aus einem Edelstahlblech geformt, das etwa eine Stärke von 1,5 mm aufweist. Der erste Sicherheitsring 18 ist im Wesentlichen zylindrisch ausgebildet und weist einen Mantel 24 mit zwei Randbereichen 25,26 auf. Im Längsschnitt ist der erste Sicherheitsring 18 im Wesentlichen u-förmig ausgebildet. Die beiden Schenkel des u-förmigen Profils bzw. die beiden Randbereiche 25,26 werden durch Umbiegen, insbesondere Bördeln, der Ränder des Edelstahlbleches ausgebildet. Durch das Umbiegen wird eine Versteifung der Kante erzielt, so dass die dünne Blechstärke ausreicht, um die benötigte Steifigkeit der Sicherheitsvorrichtung 15 zu erzielen. Der untere, deckelferne Randbereich 26 ist bevorzugt zwischen 5 und 10 mm, insbesondere 8 mm breit. Der untere Randbereich 26 weist somit eine größere Auflagefläche als die bloße Blechstärke auf, so dass im Einklemmfall die auf das Hindernis wirkende Kraft über eine größere Fläche verteilt werden kann, wodurch die Verletzungsgefahr weiter minimiert werden kann. Die dünne Blechstärke hat den Vorteil, dass das Gewicht und die Kosten reduziert werden können. Die Mantelfläche des Mantels 24 des ersten Sicherheitsrings ist bevorzugt auf der Innen und Außenseite eben ausgebildet. Sie kann aber auch ein Profil aufweisen, das den Grundkörper 18 des Sicherheitsrings 15 noch weiter versteift, z. B. ein wellenartiges Profil.

Bevorzugt sind die beiden kleineren Sicherheitsringe des Einklemmschutzes der beiden Zapfenlager wie der erste Sicherheitsring ausgebildet.

## Patentansprüche

1. Knetmaschine (1) für Nahrungsmittelteige aufweisend ein Knetmaschinengestell (2) mit einem Unterteil (4) und einem gegenüber dem Unterteil (4) zwischen einer unteren Betriebsstellung und einer oberen Reinigungsstellung verfahrbarem Kopfteil (3), wobei an dem Unterteil (4) ein Knetbottich (8) anordbar ist und an dem Kopfteil (3) ein antreibbares Knetwerkzeug (5) und ein eine Öffnung des Knetbottichs (8) in der Betriebsstellung verschließender Deckel (7) angeordnet sind, wobei der Deckel (7) umfangsseitig von einem ersten Sicherheitsring (18) einer Sicherheitsvorrichtung (15) umgeben ist, der an der Unterseite des Deckels (7) über diesen übersteht und der an dem Deckel (7) beweglich befestigt ist, wobei die Sicherheitsvorrichtung (15) eine Detektionseinrichtung aufweist, die eine Relativbewegung zwischen Deckel (7) und erstem Sicherheitsring (18) detektiert, und wobei das Knetmaschinengestell (2) wenigstens zwei Zapfenlager (14) aufweist, die jeweils aus einem Zapfen (12) und einer passenden Aufnahme (12) gebildet sind, wobei eines der Lagerelemente (12) des Zapfenlagers (14) an dem Unterteil (4) und das andere Lagerelement (13) an dem Kopfteil (3) ausgebildet sind, derart, dass sie in der unteren Betriebsstellung ineinandergreifen und die Lage des Kopfteils (3) gegenüber dem Unterteil (4) sichern, **dadurch gekennzeichnet, dass** der erste Sicherheitsring (18) einteilig mit einem Einklemmschutz für die wenigstens zwei Zapfenlager (14) ausgebildet ist.

2. Knetmaschine nach Anspruch 1, **dadurch gekennzeichnet, dass** der Einklemmschutz für die wenigstens zwei Zapfenlager (14) für jedes Zapfenlager (14) einen weiteren Sicherheitsring (19) aufweist, der das am Kopfteil (3) befestigte Lagerelement (13) umfangseitig umgibt und nach unten hin überragt, so dass ein Überstand (22) ausgebildet ist.

3. Knetmaschine nach Anspruch 2, **dadurch gekennzeichnet, dass** der Überstand (22) des Einklemmschutzes für die wenigstens zwei Zapfenlager (14) größer als die Zapfenhöhe bzw. die Eindringtiefe des Zapfens (12) in die Aufnahme (13) ist.

4. Knetmaschine nach einem der vorhergehenden Ansprüche, **dadurch gekennzeichnet, dass** die Zapfen (12) kegelförmig und in Richtung der Aufnahme (13) zulaufend ausgebildet sind.

5. Knetmaschine nach einem der vorhergehenden Ansprüche, **dadurch gekennzeichnet, dass** die Knetmaschine (1) zwei Zapfenlager (14) umfasst, die in Draufsicht jeweils auf einer Seite des Knetbottichs (8) angeordnet sind.

6. Knetmaschine nach einem der vorhergehenden Ansprüche, **dadurch gekennzeichnet, dass** an dem Unterteil (4) die Zapfen (12) angebracht sind und das Kopfteil (3) die entsprechenden Aufnahmen (13) aufweist.

7. Knetmaschine nach einem der vorhergehenden Ansprüche, **dadurch gekennzeichnet, dass** die Detektionseinrichtung derart ausgestaltet ist, auch eine Relativbewegung zwischen Kopfteil (3) und Einklemmschutz zu detektieren.

8. Knetmaschine nach einem der vorhergehenden Ansprüche, **dadurch gekennzeichnet, dass** die Sicherheitsvorrichtung (15) eine zweite Detektionseinrichtung umfasst, die dazu eingerichtet ist eine Relativbewegung zwischen Kopfteil (3) und Einklemmschutz zu detektieren.

9. Knetmaschine nach einem der vorhergehenden Ansprüche, **dadurch gekennzeichnet, dass** der erste Sicherheitsring (18) im Wesentlichen zylindrisch ausgebildet ist und einen umlaufenden Mantel (24) mit zwei Randbereichen (25,26) aufweist, wobei die beiden Randbereiche (25,26) zur Versteifung des ersten Sicherheitsrings (18) umgebogen sind.

10. Knetmaschine nach Anspruch 9, **dadurch gekennzeichnet, dass** der erste Sicherheitsring (18) aus Edelstahlblech gebildet ist, das eine Stärke zwischen 1mm und 3mm hat.

11. Knetmaschine nach Anspruch 9 oder 10, **dadurch gekennzeichnet, dass** der untere, deckelferne umgebogene Randbereich (26) bevorzugt eine Breite zwischen 5 und 15 mm aufweist.

12. Verfahren zum Einschwenken eines Knetwerkzeugs (5) in einen Knetbottich (8) einer Knetmaschine (1) für Nahrungsmittelteige, wobei die Knetmaschine (1) ein Knetmaschinengestell (2) mit einem Unterteil (4) und einem gegenüber dem Unterteil (4) zwischen einer unteren Betriebsstellung und einer oberen Reinigungsstellung verfahrbaren Kopfteil (3) aufweist, wobei an dem Unterteil (4) der Knetbottich (8) und an dem Kopfteil (3) das antreibbare Knetwerkzeug (5) und ein eine Öffnung des Knetbottichs (8) in der Betriebsstellung verschließender Deckel (7) angeordnet sind, wobei der Deckel (7) umfangsseitig von einem ersten Sicherheitsring (18) einer Sicherheitsvorrichtung (15) umgeben ist, der an der Unterseite des Deckels (7) über diesen übersteht und der an diesem beweglich befestigt ist, wobei die Sicherheitsvorrichtung (15) eine Detektionseinrichtung aufweist, die eine Relativbewegung zwischen Deckel (7) und ersten Sicherheitsring (18) detektiert, und wobei das Knetmaschinengestell (2) wenigstens zwei Zapfenlager (14) aufweist, die jeweils aus einem Zapfen (12) und einer passenden Aufnahme (13) gebildet sind, wobei eines der Lagerelemente (12) an dem Unterteil (4) und das andere Lagerelement (13) an dem Kopfteil (3) ausgebildet sind, derart, dass sie in der unteren Betriebsstellung ineinandergreifen und die Lage des Kopfteils (3) gegenüber dem Unterteil (4) sichern, und der erste Sicherheitsring (18) einteilig mit einem Einklemmschutz für die wenigstens zwei Zapfenlager (14) ausgebildet ist, der für jedes Zapfenlager (14) einen weiteren Sicherheitsring (19) aufweist, der jeweils das am Kopfteil (3) befestigte Lagerelement (13) umfangseitig umgibt, an diesem beweglich befestigt ist und dieses nach unten hin überragt, so dass ein Überstand (22) ausgebildet ist und das Verfahren folgende Schritte umfasst:
a ) Verfahren des Kopfteils (3) gegenüber dem Unterteil (4) von der oberen Reinigungsstellung in die untere Betriebsstellung,
b ) Einbringen eines Hindernisses in ein noch geöffnete Zapfenlager (14),
c ) Detektion einer Relativbewegung zwischen dem Einklemmschutz und dem Kopfteil (3),
d ) Verfahren des Kopfteils (3) in Richtung der oberen Reinigungsstellung.

13. Verfahren nach Anspruch 12, **dadurch gekennzeichnet, dass** im Verfahrensschritt d) das Kopfteil (3) in die obere Reinigungsstellung geschwenkt wird.

14. Verfahren nach Anspruch 12 oder 13, **dadurch gekennzeichnet, dass** die Detektion in Verfahrensschritt c) mittels der Detektionseinrichtung oder einer zweiten, zusätzlich zur Detektionseinrichtung an dem Einklemmschutz angebrachten Detektionseinrichtung erfolgt.

15. Verfahren nach einem der vorherigen Ansprüche 12 bis 14, **dadurch gekennzeichnet, dass** das Verfahren folgende Verfahrensschritte nach Verfahrensschritt a) umfasst:
e ) Einbringen eines Hindernisses zwischen Knetbottich (8) und Deckel (7),
f ) Detektion einer Relativbewegung zwischen dem ersten Sicherheitsring (18) und dem Deckel (7),
g ) Ansteuern des Elektromotors des Schwenkantriebs (10), so dass das Kopfteil (3) in Richtung der oberen Reinigungsstellung verfahren wird.

## Claims

1. Kneading machine (1) for food doughs comprising a kneading machine frame (2) with a lower part (4) and a head part (3) movable relative to the lower part (4) between a lower operating position and an upper cleaning position, wherein a kneading bowl (8) can be arranged on the lower part (4) and a drivable kneading tool (5) and a lid (7) closing an opening of the kneading bowl (8) in the operating position are arranged on the head part (3), wherein the lid (7) is surrounded on the circumferential side by a first safety ring (18) of a safety device (15) which projects beyond the lid (7) on the underside thereof and which is movably fastened to the lid (7), wherein the safety device (15) comprises a detection means which detects a relative movement between the lid (7) and the first safety ring (18), and wherein the kneading machine frame (2) comprises at least two trunnion bearings (14), each of which is formed by a trunnion (12) and a matching receptacle (12), one of the bearing elements (12) of the trunnion bearing (14) being formed on the lower part (4) and the other bearing element (13) being formed on the head part (3), in such a way that they engage with each other in the lower operating position and secure the position of the head part (3) with respect to the lower part (4), **characterized in that** the first safety ring (18) is formed integrally with a pinch protection for the at least two trunnion bearings (14).

2. Kneading machine according to claim 1, **characterized in that** the pinch protection for the at least two trunnion bearings (14) has for each trunnion bearing (14) a further safety ring (19) which surrounds the bearing element (13) fastened to the head part (3) on the circumferential side and projects downwards, so that an overlap (22) is formed.

3. Kneading machine according to claim 2, **characterized in that** the overlap (22) of the pinch protection for the at least two trunnion bearings (14) is greater than the trunnion height or the penetration depth of the trunnion (12) into the receptacle (13).

4. Kneading machine according to one of the preceding claims, **characterized in that** the trunnions (12) are conical and tapered in the direction of the receptacle (13).

5. Kneading machine according to one of the preceding claims, **characterized in that** the kneading machine (1) comprises two trunnion bearings (14), each of which is arranged on one side of the kneading bowl (8) in plan view.

6. Kneading machine according to one of the preceding claims, **characterized in that** the trunnions (12) are attached to the lower part (4) and the head part (3) has the corresponding receptacles (13).

7. Kneading machine according to one of the preceding claims, **characterized in that** the detection device is designed to also detect a relative movement between the head part (3) and the pinching protection.

8. Kneading machine according to one of the preceding claims, **characterized in that** the safety device (15) comprises a second detection device adapted to detect a relative movement between the head part (3) and the pinch guard.

9. Kneading machine according to one of the preceding claims, **characterized in that** the first safety ring (18) is substantially cylindrical and has a circumferential jacket (24) with two edge regions (25,26), the two edge regions (25,26) being bent over to stiffen the first safety ring (18).

10. Kneading machine according to claim 9, **characterized in that** the first safety ring (18) is formed of stainless steel sheet having a thickness between 1mm and 3mm.

11. Kneading machine according to claim 9 or 10, **characterized in that** the lower edge region (26) remote from the lid preferably has a width of between 5 and 15 mm.

12. Method for pivoting a kneading tool (5) into a kneading bowl (8) of a kneading machine (1) for food doughs, wherein the kneading machine (1) has a kneading machine frame (2) with a lower part (4) and a head part (3 ) movable relative to the lower part (4) between a lower operating position and an upper cleaning position, wherein the kneading bowl (8) is arranged on the lower part (4) and the drivable kneading tool (5) and a lid (7) closing an opening of the kneading bowl (8) in the operating position are arranged on the head part (3), wherein the lid (7) is circumferentially surrounded by a first safety ring (18) of a safety device (15) which projects beyond the lid (7) on the underside thereof and which is movably secured thereto, wherein the safety device (15) has a detection means which detects a relative movement between the lid (7) and the first safety ring (18) and wherein the kneading machine frame (2) comprises at least two trunnion bearings (14), each formed by a trunnion (12) and a matching receptacle (13), one of the bearing elements (12) being formed on the lower part (4) and the other bearing element (13) being formed on the head part (3), such that in the lower operating position they interlock and secure the position of the head part (3) with respect to the lower part (4) and the first safety ring (18) is formed in one piece with a pinch protection for the at least two trunnion bearings (14), which for each trunnion bearing (14) has a further safety ring (19), which in each case surrounds the bearing element (13) fastened to the head part (3) on the circumferential side, is fastened movably to the latter and projects beyond the latter downwards, so that an overlap (22) is formed, and the method comprises the following steps:
a ) Moving the head part (3) relative to the lower part (4) from the upper cleaning position to the lower operating position,
b ) Inserting an obstruction into a still open trunnion bearing (14),
c ) Detection of a relative movement between the pinch guard and the head part (3),
d ) Moving the head part (3) in the direction of the upper cleaning position.

13. Method according to claim 12, **characterized in that** in method step d) the head part (3) is pivoted into the upper cleaning position.

14. Method according to claim 12 or 13, **characterized in that** the detection in method step c) is carried out by means of the detection device or a second detection device attached to the pinch protection device in addition to the detection device.

15. A method according to any one of the preceding claims 12 to 14, **characterized in that** the method comprises the following method steps following after method step a):
e ) Inserting an obstacle between the kneading bowl (8) and the lid (7),
f ) Detection of relative movement between the first safety ring (18) and the lid (7),
g ) Controlling the electric motor of the swivel drive (10) so that the head part (3) is moved in the direction of the upper cleaning position.

## Revendications

1. Pétrin (1) destiné à des pâtes alimentaires, comportant un châssis de pétrin (2) pourvu d'une partie inférieure (4) et d'une partie haute (3) déplaçable par rapport à la partie inférieure (4) entre une position de service inférieure et une position de nettoyage supérieure, sur la partie inférieure (4) pouvant se placer une cuve de pétrissage (8) et sur la partie haute (3) étant placés un outil pétrisseur (5) susceptible d'être entraîné et un couvercle (7) fermant une ouverture de la cuve de pétrissage (8) dans la position de service, le couvercle (7) étant entouré sur sa circonférence d'une première bague de sécurité (18) d'un dispositif de sécurité (15), qui sur la face inférieure du couvercle (7) déborde par-dessus celui-ci, et qui est fixée de manière mobile sur le couvercle (7), le dispositif de sécurité (15) comportant un système de sécurité, qui détecte un déplacement relatif entre le couvercle (7) et la première bague de sécurité (18), et le châssis de pétrin (2) comportant au moins deux paliers à tourillon (14), dont chacun est formé d'au moins un tourillon (12) et d'un logement (13) adapté, l'un des éléments de palier (12) du palier à tourillon (14) étant conçu sur la partie inférieure (4) et l'autre élément de palier (13) étant conçu sur la partie haute (3), de sorte à s'engrener dans la position de service inférieure et à sécuriser la position de la partie haute (3) par rapport à la partie inférieure (4), **caractérisé en ce que** la première bague de sécurité (18) est conçue en monobloc avec une protection anti-coincement pour les au moins deux paliers à tourillon (14) .

2. Pétrin selon la revendication 1, **caractérisé en ce que** la protection anti-coincement pour les au moins deux paliers à tourillon (14) comporte pour chaque palier à tourillon (14) une bague de sécurité (19) supplémentaire, qui entoure sur sa circonférence l'élément de palier (13) fixé sur la partie haute (3) et qui déborde vers le bas, de sorte à créer un surplomb (22).

3. Pétrin selon la revendication 2, **caractérisé en ce que** le surplomb (22) de la protection anti-coincement pour les au moins deux paliers à tourillon (14) est supérieur à la hauteur de tourillon ou à la profondeur de pénétration du tourillon (12) dans le logement (13) .

4. Pétrin selon l'une quelconque des revendications précédentes, **caractérisé en ce que** les tourillons (12) sont conçus de forme conique et en pointe en direction du logement (13).

5. Pétrin selon l'une quelconque des revendications précédentes, **caractérisé en ce que** le pétrin (1) comprend deux paliers à tourillon (14), qui vus en élévation sont placés chacun sur un côté de la cuve de pétrissage (8).

6. Pétrin selon l'une quelconque des revendications précédentes, **caractérisé en ce que** les tourillons (12) sont montés sur la partie inférieure (4) et **en ce que** la partie haute (3) comporte les logements (13) correspondants.

7. Pétrin selon l'une quelconque des revendications précédentes, **caractérisé en ce que** le système de sécurité est conçu de sorte à détecter également un déplacement relatif entre la partie haute (3) et la protection anti-coincement.

8. Pétrin selon l'une quelconque des revendications précédentes, **caractérisé en ce que** le dispositif de sécurité (15) comprend un deuxième système de sécurité qui est aménagé pour détecter un déplacement relatif entre la partie haute (3) et la protection anti-coincement.

9. Pétrin selon l'une quelconque des revendications précédentes, **caractérisé en ce que** la première bague de sécurité (18) est conçue sensiblement de forme cylindrique et comporte une enveloppe (24) périphérique pourvue de deux zones marginales (25, 26), les deux zones marginales (25, 26) étant recourbées, pour renforcer la première bague de sécurité (18).

10. Pétrin selon la revendication 9, **caractérisé en ce que** la première bague de sécurité (18) est conçue en tôle d'acier inoxydable, qui présente une épaisseur comprise entre 1 mm et 3 mm.

11. Pétrin selon la revendication 9 ou 10, **caractérisé en ce que** la zone marginale (26) inférieure recourbée, éloignée du couvercle présente de préférence une largeur comprise entre 5 et 15 mm.

12. Procédé, destiné à faire basculer un outil pétrisseur (5) dans une cuve de pétrissage (8) d'un pétrin (1) destiné à des pâtes alimentaires, le pétrin (1) comportant un châssis de pétrin (2) pourvu d'une partie inférieure (4) et d'une partie haute (3) déplaçable par rapport à la partie inférieure (4) entre une position de service inférieure et une position de nettoyage supérieure, sur la partie inférieure (4) de la cuve de pétrissage (8) et sur la partie haute (3) étant placés un outil pétrisseur (5) susceptible d'être entraîné et un couvercle (7) fermant une ouverture de la cuve de pétrissage (8) dans la position de service, le couvercle (7) étant entouré sur sa circonférence d'une première bague de sécurité (18) d'un dispositif de sécurité (15), qui sur la face inférieure du couvercle (7) déborde par-dessus celui-ci, et qui est fixée de manière mobile sur celui-ci, le dispositif de sécurité (15) comportant un système de sécurité qui détecte une position relative entre le couvercle (7) et la première bague de sécurité (18), et le châssis de pétrin (2) comportant au moins deux paliers à tourillon (14), dont chacun est formé d'au moins un tourillon (12) et d'un logement (13) adapté, l'un des éléments de palier (12) étant conçu sur la partie inférieure (4) et l'autre élément de palier (13) étant conçu sur la partie haute (3), de sorte à s'engrener dans la position de service inférieure et à sécuriser la position de la partie haute (3) par rapport à la partie inférieure (4), et la première bague de sécurité (18) étant conçue en monobloc avec une protection anti-coincement pour les au moins deux paliers à tourillon (14), qui pour chaque palier à tourillon (14) comporte une bague de sécurité (19) supplémentaire, qui entoure respectivement sur sa circonférence l'élément de palier (13) fixé sur la partie haute (3), est fixée de manière mobile sur celle-ci et déborde par-dessus celle-ci vers le bas, de sorte à créer un surplomb (22) et le procédé comprenant les étapes suivantes, consistant à :
a) déplacer la partie haute (3) par rapport à la partie inférieure (4), de la position de nettoyage supérieure dans la position de service inférieure,
b) introduire un obstacle dans un palier à tourillon (14) encore ouvert,
c) détecter un déplacement relatif entre la protection anti-coincement et la partie haute (3) ,
d) déplacer la partie haute (3) en direction de la position de nettoyage supérieure.

13. Procédé selon la revendication 12, **caractérisé en ce que** dans l'étape de procédé d), l'on fait basculer la partie haute (3) dans la position de nettoyage supérieure.

14. Procédé selon la revendication 12 ou 13, **caractérisé en ce que** la détection dans l'étape de procédé c) s'effectue au moyen du système de sécurité ou d'un deuxième système de sécurité, monté en sus du système de sécurité sur la protection anti-coincement.

15. Procédé selon l'une quelconque des revendications précédentes 12 à 14, **caractérisé en ce que** le procédé comprend après l'étape de procédé a), les étapes de procédé suivantes consistant à :
e) introduire un obstacle entre la cuve de pétrissage (8) et le couvercle (7),
f) détecter un déplacement relatif entre la première bague de sécurité (18) et le couvercle (7),
g) activer le moteur électrique de l'entraînement en basculement (10), de sorte à déplacer la partie haute (3) en direction de la position de nettoyage supérieure.
